# EUROPEAN PATENT APPLICATION

(11) **EP 4 621 896 A1**
(43) Date of publication of application: **24.09.2025**
(21) Application number: 24214559.7
(22) Date of filing: 21.11.2024
(51) Int. Cl.: H01M 10/04, H01M 10/0587, H01M 10/54

(54) **CYLINDRICAL BATTERY**

(30) Priority: 21.03.2024 CN 202420558256 U
(71) Applicant: CALB Group Co., Ltd., Changzhou City, Jiangsu Province (CN)
(72) Inventor: ZHANG, Lulu, Changzhou City, Jiangsu Province (CN)
(74) Representative: Becker Kurig & Partner Patentanwälte mbB

(57) **Abstract**

A cylindrical battery includes a winding core (10) and an insulating film (20). The winding core (10) includes a first pole piece (11), a second pole piece (12) and a separator (13). The separator (13) is located between the first pole piece (11) and the second pole piece (12), and the separator (13) forms at least a part of a circumferential outer surface of the winding core (10). The insulating film (20) is provided on the circumferential outer surface of the winding core (10) and fixed on the separator (13). The insulating film (20) includes a first end (21) and a second end (22) which are opposite to each other, while, in a circumferential direction of the winding core (10), a length of the insulating film (20) is a, a circumference of the winding core (10) is b, and a/b is 70%-110%.

## Description

### BACKGROUND

### Technical Field

The present disclosure relates to the technical field of batteries, and in particular to a cylindrical battery.

### Description of Related Art

In the related art, in order to improve the overall recycling performance of subsequent batteries, some used batteries are recycled. During the disassembly process of large-size batteries, due to the general weak strength of the separator, there is a fracture during the disassembly process, which reduces the overall disassembly rate of the battery and is not conducive to efficient recycling of batteries.

### SUMMARY

The disclosure provides a cylindrical battery, so as to improve the service performance of the cylindrical battery.

The disclosure provides a cylindrical battery, including:
a winding core, including a first pole piece, a second pole piece, and a separator, wherein the separator is located between the first pole piece and the second pole piece, and the separator forms at least a part of a circumferential outer surface of the winding core; and
an insulating film provided on the circumferential outer surface of the winding core and fixed on the separator, wherein the insulating film includes a first end and a second end which are opposite to each other, while, in a circumferential direction of the winding core, a length of the insulating film is a, a circumference of the winding core is b, and a/b is 70%-110%.

The cylindrical battery of the embodiment of the present disclosure includes a winding core and an insulating film, and the insulating film is provided on the circumferential outer surface of the winding core, whereby a binding to the circumferential outer surface of the winding core can be formed, and an insulation protection to the winding core can be formed. The winding core includes a first pole piece, a second pole piece, and a separator, the separator is located between the first pole piece and the second pole piece, and the separator forms at least a part of the circumferential outer surface of the winding core, so that the separator can further improve the insulation ability of the winding core on the basis of forming insulation protection for the first pole piece and the second pole piece. The insulating film is fixed on the separator, and on the basis of ensuring the connection stability of the insulating film, it is also possible for the insulating film to form a support for the separator. In a circumferential direction of the winding core, a length of the insulating film is a, a circumference of the winding core is b, and a/b is 70%-110%, which can not only facilitate the separation of the separator from the first pole piece and the second pole piece under support of the insulating film, but also avoid occurrence of local stress concentration and fracture in a recycling process, and can also avoid occurrence of uneven circumferential outer surface of the winding core due to excessive overlap of the insulating film, occurrence of stress concentration in a large area due to local excessive thickness, and the risks of material dropping or lithium precipitation of the first pole piece or the second pole piece, so as to improve the safe use performance of the battery on the basis of convenience for efficient recycling of the battery.

### BRIEF DESCRIPTION OF THE DRAWINGS

For a better understanding of the present disclosure, reference may be made to the embodiments illustrated in the following drawings. The components in the drawings are not necessarily to scale, and related elements may be omitted to emphasize and clearly illustrate the features of the present disclosure. In addition, the associated elements or components may have different arrangements as known in the art. Further, in the drawings, like reference numerals designate identical or similar parts throughout the several views. In the technical solution:
FIG. 1 is a schematic structural diagram of a winding core of a cylindrical battery according to a first exemplary implementation;
FIG. 2 is a schematic structural diagram of a winding core of a cylindrical battery according to a second exemplary implementation;
FIG. 3 is a schematic structural diagram of a winding core of a cylindrical battery according to a third exemplary implementation; and
FIG. 4 is a partial schematic structural diagram of a winding core of a cylindrical battery according to an exemplary implementation.

### Reference numerals:

10, winding core; 11, first pole piece; 12, second pole piece; 13, separator; 131, free end; 20, insulating film; 21, first end; 22, second end.

### DESCRIPTION OF THE EMBODIMENTS

The technical solutions in the exemplary embodiments of the present disclosure will be described clearly and completely in combination with the drawings in the exemplary embodiments of the present disclosure. The exemplary embodiments described herein are for illustrative purposes only and are not intended to limit the scope of the present disclosure, so it is to be understood that various modifications and changes may be made to the exemplary embodiments without departing from the scope of protection of the present disclosure.

In the description of the present disclosure, the terms "first" and "second" are used for descriptive purposes only and are not to be construed as indicating or implying relative importance unless explicitly stated or limited otherwise; the term "plurality" means two or more than two; the term "and/or" includes any and all combinations of one or more of the associated listed items. In particular, reference to "the" object or "an" object is also intended to mean one of a possible plurality of such objects.

Unless otherwise specified or indicated, the terms "connection", "fixation", and the like are to be construed broadly. For example, "connection" may be fixed, or may be detachable, or may be integral, or may be electrical, or may be connected via a signal; and the "connection" may be a direct connection or an indirect connection through an intermediary. The specific meaning of the above-mentioned terms in the present disclosure can be understood by a person skilled in the art according to specific circumstances.

Further, in the description of the present disclosure, it is to be understood that the directional terms "upper", "lower", "inner", "outer", and the like, as described in terms of angles shown in the drawings and should not be construed as limiting the exemplary embodiments of the present disclosure. It will also be understood that when an element or feature is referred to as being "on", "under", or "inside" or "outside" other element(s), it can not only be directly connected "on", "under", "inside" or "outside" the other element(s), but also indirectly connected "on", "under", "inside" or "outside" the other element(s) through intervening elements.

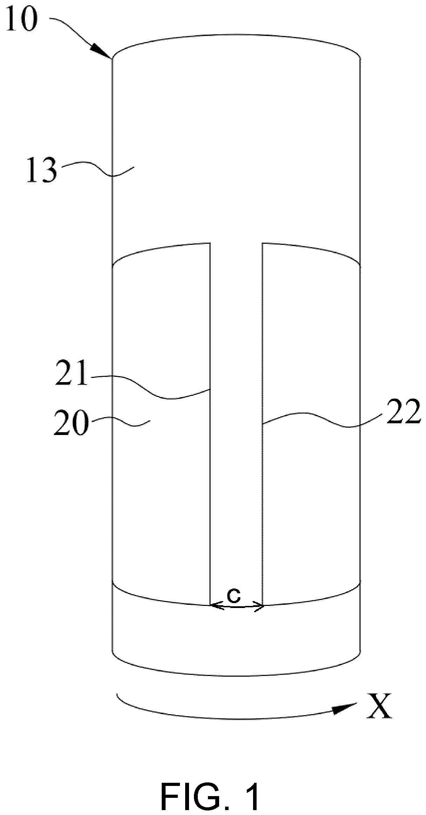

An embodiment of the disclosure provides a cylindrical battery, and, with reference to FIG. 1 to FIG. 4, the cylindrical battery includes: a winding core 10, the winding core 10 including a first pole piece 11, a second pole piece 12 and a separator 13, wherein the separator 13 is located between the first pole piece 11 and the second pole piece 12, and the separator 13 forms at least a part of a circumferential outer surface of the winding core 10; and an insulating film 20 provided on the circumferential outer surface of the winding core 10 and fixed on the separator 13, wherein the insulating film 20 includes a first end 21 and a second end 22 which are opposite to each other, while, in a circumferential direction of the winding core 10, a length of the insulating film 20 is a, a circumference of the winding core 10 is b, and a/b is 70%-110%.

The cylindrical battery of an embodiment of the present disclosure includes a winding core 10 and an insulating film 20, and the insulating film 20 is provided on the circumferential outer surface of the winding core 10, whereby a binding to the circumferential outer surface of the winding core 10 can be formed, and an insulation protection to the winding core 10 can be formed. The winding core 10 includes a first pole piece 11, a second pole piece 12, and a separator 13, the separator 13 is located between the first pole piece 11 and the second pole piece 12, and the separator 13 forms at least a part of the circumferential outer surface of the winding core 10, so that the separator 13 can further improve the insulation ability of the winding core 10 on the basis of forming insulation protection for the first pole piece 11 and the second pole piece 12. The insulating film 20 is fixed on the separator 13, and on the basis of ensuring the connection stability of the insulating film 20, it is also possible for the insulating film 20 to form a support for the separator 13. In a circumferential direction of the winding core 10, a length of the insulating film 20 is a, a circumference of the winding core 10 is b, and a/b is 70%-110%, which can not only facilitate the separation of the separator 13 from the first pole piece 11 and the second pole piece 12 under support of the insulating film 20, but also avoid occurrence of local stress concentration and fracture in a recycling process, and can also avoid occurrence of uneven circumferential outer surface of the winding core 10 due to excessive overlap of the insulating film 20, occurrence of stress concentration in a large area due to local excessive thickness, and the risks of material dropping or lithium precipitation of the first pole piece 11 or the second pole piece 12, so as to improve the safe use performance of the battery on the basis of convenience for efficient recycling of the battery.

Note that, as shown in FIG. 1 to FIG. 3, the insulating film 20 is fixedly connected to the circumferential outer surface of the winding core 10, and the insulating film 20 includes a first end 21 and a second end 22 which are opposite to each other. There may be a gap between the first end 21 and the second end 22, whereby the insulating film 20 may cover only a part of the circumferential direction of the winding core 10; or the first end 21 and the second end 22 may be opposite to each other, whereby the insulating film 20 may cover the entire circumferential direction of the winding core 10; or the first end 21 and the second end 22 may be provided at intervals, but the first end 21 or the second end 22 covers the insulating film 20.

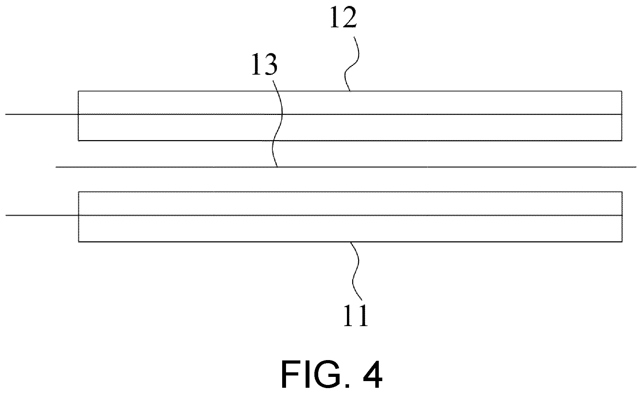

As shown in FIG. 4, the winding core 10 includes a first pole piece 11, a second pole piece 12, and a separator 13, the separator 13 is located between the first pole piece 11 and the second pole piece 12, the first pole piece 11, the second pole piece 12, and the separator 13 are wound and formed on a winding core rod, the separator 13 forms at least a part of the circumferential outer surface of the winding core 10, and the separator 13 may be multilayer, thereby enabling two adjacent separators 13 to protect the first pole piece 11 and the second pole piece 12 respectively, thereby improving the insulation ability of the winding core 10.

As shown in FIG. 1, the circumferential direction of the winding core 10 can be represented as X, and in the circumferential direction of the winding core 10, the length of the insulating film 20 is a, and the circumference of the winding core 10 is b. By setting A ratio of the length a of the insulating film 20 to the circumference b of the winding core 10 to be 70%-110%, it is possible to avoid the risk that the insulating film 20 is too long and the overlapping area is too large while the insulating film 20 reliably supports the separator 13.

If the ratio of the length a of the insulating film 20 to the circumference b of the winding core 10 is too small, the length of the insulating film 20 is relatively too small, and the separator 13 is less supported by the insulating film 20, which is not conducive to realizing the separation of the separator 13 from the first pole piece 11 and the second pole piece 12, and there may be a risk of fracture due to local stress concentration during the recycling process. However, when the ratio of the length a of the insulating film 20 to the circumference b of the winding core 10 is too large, the length of the insulating film 20 is relatively too large, the overlapping region of the insulating film 20 is too large, the circumferential outer surface of the winding core 10 is uneven and there is stress concentration due to local excessive thickness, the pole piece has problems such as material dropping or lithium precipitation, and when the overlapping region of the insulating film 20 is too large, heat dissipation rate between the winding core 10 and a battery housing is relatively slow, which is not conducive to ensuring the safety performance of the cylindrical battery and to expand the winding core 10, which may affect the service performance of the cylindrical battery.

In the process of recycling the battery, the first pole piece 11, the second pole piece 12, and the separator 13 can be separated, and the insulating film 20 can be connected to the separator 13, and the insulating film 20 can further function as supporting the separator 13 when the first pole piece 11, the second pole piece 12, and the separator 13 are separated, so that the separation of the first pole piece 11, the second pole piece 12, and the separator 13 can be facilitated, and the active material or the like can be recovered after the separation.

In the circumferential direction of the winding core 10, the length of the insulating film 20 is a, and when the length a of the insulating film 20 is measured, the length a of the insulating film 20 can be obtained by removing the insulating film 20 from the winding core 10, laying the insulating film 20, and measuring a linear distance between the first end 21 and the second end 22.

The ratio of the length a of the insulating film 20 to the circumference b of the winding core 10 may be 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, 99.8%, 100%, 101%, 102%, 103%, 104%, 105%, 106%, 107%, 108%, 109%, or 110%, etc.

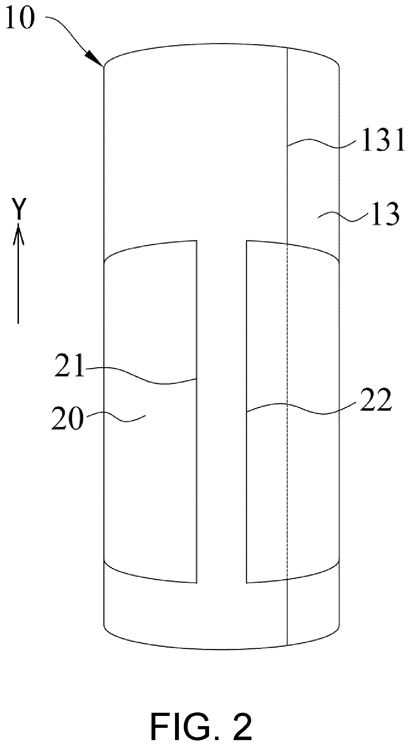

In one embodiment, the ratio of the length a of the insulating film 20 to the circumference b of the winding core 10 may be less than 100%, i.e., there is no overlapping region of the insulating film 20, as shown in FIG. 1 and FIG. 2.

In one embodiment, a/b>100%, that is, the ratio of the length a of the insulating film 20 to the circumference b of the winding core 10 may be greater than or equal to 100%, whereby the first end 21 and the second end 22 of the insulating film 20 may be connected to each other, or the insulating film 20 may be formed with an overlapping region. Considering that a surface, facing the winding core 10, of the insulating film 20 is provided with an adhesive layer, the connection stability of the insulating film 20 is ensured. When the ratio of the length a of the insulating film 20 to the circumference b of the winding core 10 is greater than 100%, the insulating film 20 may be adhered to the separator 13, or the insulating film 20 may not be adhered to the separator 13, i.e. the overlapping portion of the insulating film 20 is adhered, thereby preventing the insulating film 20 with the adhesive layer from adhering to the surface of the winding core 10 and causing the separator 13 to be easily damaged, and forming an effective support for the separator 13 by the insulating film 20, thereby allowing the winding core 10 to be easily recycled.
In one embodiment, in an axial direction of the winding core 10, a ratio of a size of the insulating film 20 to a size of the separator 13 is 0.6-0.98, which not only ensures that the insulating film 20 forms an effective support for the separator 13, but also prevents the insulating film 20 from affecting the normal penetration of the electrolyte, thereby ensuring the overall cycle life of the battery.

When the ratio of the size of the insulating film 20 to the size of the separator 13 is too small, the support of the insulating film 20 to the separator 13 in a height direction is relatively small, which is not conducive to improving the separation between the first pole piece 11, the second pole piece 12, and the separator 13. However, if the ratio of the size of the insulating film 20 to the size of the separator 13 is too large,the insulating film 20 prevents the electrolyte between the battery housing and the winding core 10 from penetrating quickly, thereby reducing the overall cycle life of the battery.

In connection with FIG. 2, the axial direction of the winding core 10 can be represented by Y, and the axial direction of the winding core 10 can be regarded as the height direction of the winding core 10.

In the axial direction of the winding core 10, the ratio of the size of the insulating film 20 to the size of the separator 13 may be 0.6, 0.62, 0.65, 0.68, 0.7, 0.72, 0.75, 0.78, 0.8, 0.82, 0.85, 0.88, 0.9, 0.92, 0.95, or 0.98, etc.

In one embodiment, a distance between at least one end of the insulating film 20 and an end portion of the separator 13 in the axial direction of the winding core 10 is ≤15 mm, whereby the insulating film 20 can form a relatively reliable support for a height direction of the separator 13, thereby reducing the probability of damage to the separator 13 and improving the battery recycling efficiency.

In the axial direction of the winding core 10, the distance between at least one end of the insulating film 20 and the end portion of the separator 13 may be 15 mm, 14 mm, 13 mm, 12 mm, 11 mm, 10 mm, 9 mm, 8 mm, 7 mm, 6 mm, or 5 mm, etc.

In one embodiment, an elastic modulus of the insulating film 20 is greater than an elastic modulus of the separator 13, so that the insulating film 20 can form an effective support for the separator 13, and the separation of the first pole piece 11, the second pole piece 12, and the separator 13 can be facilitated, thereby improving the overall disassembly rate.

The insulating film 20 has an elastic modulus of 1 GPa-7 GPa, so that elastic ability of the insulating film 20 is effectively controlled and supporting ability of the insulating film 20 to the separator 13 is ensured.

The elastic modulus of the insulating film 20 may be 1 GPa, 1.1 GPa, 1.2 GPa, 1.4 GPa, 1.5 GPa, 1.6 GPa, 1.7 GPa, 1.8 GPa, 2 GPa, 2.1 GPa, 2.2 GPa, 2.4 GPa, 2.5 GPa, 2.6 GPa, 2.7 GPa, 2.8 GPa, 3 GPa, 3.1 GPa, 3.2 GPa, 3.4 GPa, 3.5 GPa, 3.6 GPa, 3.7 GPa, 3.8 GPa, 4 GPa, 4.1 GPa, 4.2 GPa, 4.4 GPa, 4.5 GPa, 4.6 GPa, 4.7 GPa, 4.8 GPa, 5 GPa, 5.1 GPa, 5.2 GPa, 5.4 GPa, 5.5 GPa, 5.6 GPa, 5.7 GPa, 5.8 GPa, 6 GPa, 6.1 GPa, 6.2 GPa, 6.4 GPa, 6.5 GPa, 6.6 GPa, 6.7 GPa, 6.8 GPa, or 7 GPa, etc.

In one embodiment, a ratio of a thickness of the insulating film 20 to a thickness of the separator 13 is 2-20, and on the basis of ensuring that the insulating film 20 can form a structural strengthening of the separator 13, the risk of fracture of the separator 13 is reduced, and the insulating film 20 can also be avoided from occupying a large space inside the battery.

When the ratio of the thickness of the insulating film 20 to the thickness of the separator 13 is too small, it is difficult for the insulating film 20 to improve the strength of the separator 13, and there is a high risk of fracture of the separator 13. However, if the ratio of the thickness of the insulating film 20 to the thickness of the separator 13 is too large,the insulating film 20 occupies a large space inside the battery, which is not conducive to improving the overall energy density of the battery.

The ratio of the thickness of the insulating film 20 to the thickness of the separator 13 may be 2, 2.2, 2.5, 2.8, 3, 3.2, 3.5, 3.8, 4, 4.2, 4.5, 4.8, 5, 5.2, 5.5, 5.8, 6, 6.2, 6.5, 6.8, 7, 7.2, 7.5, 7.8, 8, 8.2, 8.5, 8.8, 9, 9.2, 9.5, 9.8, 10, 11, 11.5, 12, 12.5, 13, 13.5, 14, 14.5, 15, 15.5, 16, 16.5, 17, 17.5, 18, 18.5, 19, 19.5, or 20, etc.

In one embodiment, the separator 13 has a thickness of 5 µm-18 µm, so that the thickness of the separator 13 is not too large to occupy a large space on the basis of ensuring that the separator 13 can form reliable protection for the first pole piece 11 and the second pole piece 12.

The thickness of the separator 13 may be 5 µm, 5.5 µm, 6 µm, 6.5 µm, 7 µm, 7.5 µm, 8 µm, 8.5 µm, 9 µm, 9.5 µm, 10 m, 10.5 µm, 11 µm, 11.5 µm, 12 µm, 12.5 µm, 13 µm, 13.5 µm, 14 µm, 14.5 µm, 15 µm, 15.5 µm, 16 µm, 16.5 µm, 17 µm, 17.5 µm, or 18 µm, etc.

In one embodiment, the insulating film 20 has a thickness of 0.03 mm-0.2 mm, which not only ensures that the insulating film 20 can form an overall support strength for the separator 13, but also prevents the excessive thickness of the insulating film 20 from occupying a large space inside the battery.

The thickness of the insulating film 20 may be 0.03 mm, 0.05 mm, 0.06 mm, 0.07 mm, 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, or 0.2 mm, etc.

In one embodiment, a spacing distance c between the first end 21 and the second end 22 is 0.8 mm-60 mm, so that excessive overlap of the insulating film 20 can be avoided, and it is also possible to ensure that the insulating film 20 can have a reliable length size, thereby ensuring that the insulating film 20 forms effective support and protection for the separator 13, which is beneficial to improving the recycling efficiency of the battery.

In connection with FIG. 1, along the circumferential direction X of the winding core 10, the spacing distance between the first end 21 and the second end 22 may be represented as c, and the spacing distance c between the first end 21 and the second end 22 may be 0.8 mm, 1 mm, 2 mm, 3 mm, 4 mm, 5 mm, 6 mm, 8 mm, 10 mm, 12 mm, 14 mm, 15 mm, 16 mm, 18 mm, 20 mm, 22 mm, 24 mm, 25 mm, 26 mm, 28 mm, 30 mm, 32 mm, 34 mm, 35 mm, 36 mm, 38 mm, 40 mm, 42 mm, 44 mm, 45 mm, 46 mm, 48 mm, 50 mm, 52 mm, 54 mm, 55 mm, 56 mm, 58 mm, or 60 mm, etc.

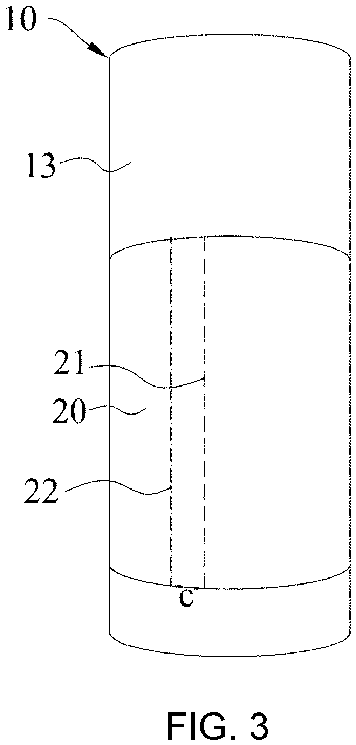

Note that the spacing distance c between the first end 21 and the second end 22 is 0.8 mm-60 mm, and as shown in FIG. 1, the ratio of the length a of the insulating film 20 to the circumference b of the winding core 10 may be less than 100%, that is, the spacing distance c between the first end 21 and the second end 22 is 0.8 mm-60 mm. Alternatively, as shown in FIG. 3, the ratio of the length a of the insulating film 20 to the circumference b of the winding core 10 is greater than 100%, that is, the insulating film 20 forms an overlapping region having a size of the spacing distance c between the first end 21 and the second end 22, and it is shown in FIG. 3 that the first end 21 may be covered by the insulating film 20.

In one embodiment, the separator 13 has a free end 131, the free end 131 is located on the circumferential outer surface of the winding core 10, the free end 131 of the separator 13 is a last part where the separator 13 is wound and formed during the winding process, and the free end 131 of the separator 13 is a first part to be disassembled when the winding core 10 is disassembled.

As shown in FIG. 2, both the first end 21 and the second end 22 are provided offset from the free end 131, so that the disassembly of the free end 131 can also be facilitated. For example, the free end 131 of the separator 13 is pressed below the insulating film 20, or the free end 131 of the separator 13 is located in the gap between the first end 21 and the second end 22 of the insulating film 20.

In one embodiment, the distance between the first end 21 or the second end 22 and the free end 131 in the circumferential direction of the winding core 10 is 5 mm-50 mm, and on the basis of facilitating the disassembly of the separator 13, it is also possible to ensure that the insulating film 20 can form effective support and protection for the separator 13, reduce the risk of damage to the separator 13, and improve the disassembly efficiency of the battery.

The spacing between the first end 21 or the second end 22 and the free end 131 in the circumferential direction of the winding core 10 may be 5 mm, 6 mm, 8 mm, 10 mm, 12 mm, 14 mm, 15 mm, 16 mm, 18 mm, 20 mm, 22 mm, 24 mm, 25 mm, 26 mm, 28 mm, 30 mm, 32 mm, 34 mm, 35 mm, 36 mm, 38 mm, 40 mm, 42 mm, 44 mm, 45 mm, 46 mm, 48 mm, or 50 mm, etc.

In one embodiment, the insulating film 20 is adhered to the separator 13, which not only facilitates the installation of the insulating film 20, but also ensures the connection ability between the insulating film 20 and the separator 13, and ensures that the insulating film 20 can provide sufficient support and protection for the separator 13.

Among them, an adhesive strength between the insulating film 20 and the separator 13 is 0.05 N/mm²-1 N/mm², and on the basis of ensuring the connection strength between the insulating film 20 and the separator 13, the support of the insulating film 20 to the separator 13 can also be effectively ensured, which is beneficial to improving the recycling efficiency of the battery.

The adhesive strength between the insulating film 20 and the separator 13 may be 0.05 N/mm², 0.06 N/mm², 0.08 N/mm², 0.09 N/mm², 0.1 N/mm², 0.15 N/mm², 0.2 N/mm², 0.25 N/mm², 0.3 N/mm², 0.35 N/mm², 0.4 N/mm², 0.45 N/mm², 0.5 N/mm², 0.55 N/mm², 0.6 N/mm², 0.65 N/mm², 0.7 N/m², 0.75 N/mm², 0.8 N/mm², 0.85 N/mm², 0.9 N/mm², 0.95 N/mm², or 1 N/mm², etc.

In one embodiment, as shown in FIG. 2, the separator 13 has a free end 131 located on the circumferential outer surface of the winding core 10, wherein, in the circumferential direction of the winding core 10, a distance between the second end 22 and the free end 131 is smaller than a distance between the first end 21 and the free end 131, the direction in which the insulating film 20 extends from the first end 21 to the second end 22 in the circumferential direction of the winding core 10 coincides with at least a part of a winding direction of the separator 13, that is, when the battery is recycled, the insulating film 20 can be disassembled from the second end 22 and a disassembly direction of the separator 13 is also disassembled from the free end 131, and the disassembly direction of the separator 13 also coincides a direction in which the insulating film 20 extends from the second end 22 to the first end 21 in the circumferential direction of the winding core 10, thereby facilitating the disassembly of the winding core 10 and effectively improving the disassembly efficiency of the battery.

Note that the battery includes a winding core and an electrolyte, and a minimum unit capable of performing an electrochemical reaction such as charge/discharge. A winding core refers to a unit formed by winding or laminating a stack comprising a first pole piece, a partition material, and a second pole piece. When the first pole piece is a positive plate, the second pole piece is a negative plate. The polarities of the first pole piece and the second pole piece may be interchanged. The first pole piece and the second pole piece are coated with an active material, and the partition material may be a separator.

An embodiment of the present disclosure also provides a battery pack including the above-mentioned battery.

The cylindrical battery of the battery pack of an embodiment of the present disclosure includes a winding core 10 and an insulating film 20, and the insulating film 20 is provided on the circumferential outer surface of the winding core 10, whereby a binding to the circumferential outer surface of the winding core 10 can be formed, and an insulation protection to the winding core 10 can be formed. The winding core 10 includes a first pole piece 11, a second pole piece 12, and a separator 13, the separator 13 is located between the first pole piece 11 and the second pole piece 12, and the separator 13 forms at least a part of the circumferential outer surface of the winding core 10, so that the separator 13 can further improve the insulation ability of the winding core 10 on the basis of forming insulation protection for the first pole piece 11 and the second pole piece 12. The insulating film 20 is fixed on the separator 13, and on the basis of ensuring the connection stability of the insulating film 20, it is also possible for the insulating film 20 to form a support for the separator 13. In a circumferential direction of the winding core 10, a length of the insulating film 20 is a, a circumference of the winding core 10 is b, and a/b is 70%-110%, which can not only facilitate the separation of the separator 13 from the first pole piece 11 and the second pole piece 12 under support of the insulating film 20, but also avoid occurrence of local stress concentration and fracture in a recycling process, and can also avoid occurrence of uneven circumferential outer surface of the winding core 10 due to excessive overlap of the insulating film 20, occurrence of stress concentration in a large area due to local excessive thickness, and the risks of material dropping or lithium precipitation of the first pole piece 11 or the second pole piece 12, so as to improve the safe use performance of the battery on the basis of convenience for efficient recycling of the battery.

In one embodiment, the battery pack is a battery module or a battery pack.

The battery module includes a plurality of batteries, and the battery module may further include a bracket, and the batteries may be fixed to the bracket.

The battery pack includes a plurality of batteries and a case for fixing the plurality of batteries.

Note that the battery pack includes a plurality of batteries, and the plurality of batteries are provided in the case. The plurality of batteries may form a battery module and then be mounted in the case. Alternatively, the plurality of batteries may be provided directly within the case, without grouping the plurality of batteries, and the case may be used to fix the plurality of batteries.

Other implementations of the present disclosure will be apparent to a person skilled in the art from consideration of the utility model creation in the description and practice herein. The present disclosure is intended to cover any variations, uses, or adaptations of the present disclosure following, in general, the principles of the disclosure and including such departures from the present disclosure as come within common knowledge or customary practice in the art to which the disclosure pertains. It is intended that the specification and exemplary implementations be considered as exemplary only, with a true scope and spirit of the disclosure being indicated by the following claims.

It should be understood that the present disclosure is not limited to the precise structures described above and shown in the accompanying drawings, and that various modifications and changes may be made without departing from the scope thereof. The scope of protection of the disclosure is only limited by the appended claims.

## Claims

1. A cylindrical battery, **characterized by** comprising:
a winding core (10), comprising a first pole piece (11), a second pole piece (12), and a separator (13), wherein the separator (13) is located between the first pole piece (11) and the second pole piece (12), and the separator (13) forms at least a part of a circumferential outer surface of the winding core (10); and
an insulating film (20) provided on the circumferential outer surface of the winding core (10) and fixed on the separator (13), wherein the insulating film (20) comprises a first end (21) and a second end (22) which are opposite to each other, while, in a circumferential direction of the winding core (10), a length of the insulating film (20) is a, a circumference of the winding core (10) is b, and a/b is 70%-110%.

2. The cylindrical battery according to claim 1, **characterized in that** a/b≥100%, and a surface, facing the winding core (10), of the insulating film (20) is provided with an adhesive layer.

3. The cylindrical battery according to claim 1, **characterized in that** a ratio of a size of the insulating film (20) to a size of the separator (13) in an axial direction of the winding core (10) is 0.6-0.98.

4. The cylindrical battery according to claim 1, **characterized in that**, in an axial direction of the winding core (10), a distance between at least one end of the insulating film (20) and an end portion of the separator (13) is ≤15 mm, and/or a ratio of a thickness of the insulating film (20) to a thickness of the separator (13) is 2-20.

5. The cylindrical battery according to claim 1, **characterized in that** an elastic modulus of the insulating film (20) is greater than an elastic modulus of the separator (13);
wherein the insulating film (20) has an elastic modulus of 1 GPa-7 GPa.

6. The cylindrical battery according to any one of claims 1 to 5, **characterized in that** the separator (13) has a thickness of 5 µm-18 µm, and/or the insulating film (20) has a thickness of 0.03 mm-0.2 mm, and/or a spacing distance (c) between the first end (21) and the second end (22) is 0.8 mm-60 mm.

7. The cylindrical battery according to any one of claims 1 to 5, **characterized in that** the separator (13) has a free end (131) located at the circumferential outer surface of the winding core (10);
wherein both the first end (21) and the second end (22) are provided offset from the free end (131).

8. The cylindrical battery according to claim 7, **characterized in that** a distance between the first end (21) or the second end (22) and the free end (131) in the circumferential direction of the winding core (10) is 5 mm-50 mm.

9. The cylindrical battery according to any one of claims 1 to 5, **characterized in that** the insulating film (20) is adhered to the separator (13);
wherein an adhesive strength between the insulating film (20) and the separator (13) is 0.05 N/mm²-1N/mm².

10. The cylindrical battery according to any one of claims 1 to 5, **characterized in that** the separator (13) has a free end (131) located at the circumferential outer surface of the winding core (10);
wherein, in the circumferential direction of the winding core (10), a distance between the second end (22) and the free end (131) is smaller than a distance between the first end (21) and the free end (131), and a direction in which the insulating film (20) extends from the first end (21) to the second end (22) in the circumferential direction of the winding core (10) coincides with a winding direction of the separator (13).
